# EUROPEAN PATENT SPECIFICATION

(11) **EP 0 521 641 B1**
(45) Date of publication and mention of the grant of the patent: **21.02.1996**
(21) Application number: 92305697.2
(22) Date of filing: 22.06.1992
(51) Int. Cl.: F02D 41/14, F01N 9/00

(54) **Method and apparatus for detecting catalyst malfunctions**
Verfahren und Vorrichtung zum Feststellen von Katalysator-Funktionsstörungen
Procédé et appareil pour détecter les défaillances d'un catalyseur

(30) Priority: 28.06.1991 US 724399
(43) Date of publication of application: 07.01.1993
(73) Proprietor: FORD MOTOR COMPANY LIMITED, Brentwood Essex (GB); FORD FRANCE S. A., F-92506 Rueil-Malmaison Cédex (FR); FORD-WERKE AKTIENGESELLSCHAFT, D-50725 Köln (DE)
(72) Inventor: Hamburg, Douglas Ray, Birmingham, Michigan 48010 (US); Cook, Jeffrey Arthur, Dearborn, Michigan 48124 (US)
(74) Representative: Messulam, Alec Moses

(56) References cited:
- US-A- 4 622 809
- PATENT ABSTRACTS OF JAPAN, unexamined applications, M field, vol. 14, no. 375, August 14, 1990 THE PATENT OFFICE JAPANESE GOVERNMENT page 34 M 1010

## Description

The invention relates to a method and apparatus for detecting catalyst malfunction in a vehicle.

It is known to use a catalyst, such as a three-way catalyst, in the exhaust system of an automobile to reduce various types of emissions. It is also known to attempt to determine the condition of the catalyst through the use of exhaust gas oxygen sensors, such as, for example, a heated exhaust gas oxygen sensor (the HEGO), positioned downstream of the catalyst. It is also known to use such a HEGO sensor to achieve improved performance of the air fuel feedback control system for the vehicle engine. It would be desirable to use the HEGO sensor to determine the condition of the catalyst by using the limit cycle frequency as an indicator of catalyst degradation.

US-A-4,662,809 discloses a method for testing and adjusting catalytic exhaust gas emission control systems of internal combustion engines, in which the fuel-air-ratio is regulated by means of a control-probe arranged in the exhaust gas stream upstream of the catalyst, whereby the exhaust gas stream is measured downstream of the catalyst by means of a further test-probe. The voltage average value and amplitude magnitude of the signal produced by the test-probe are determined and serve for adjusting the operating point of the control system and for the recognition of the catalyst efficiency.

This invention teaches using the effect of the catalyst on closed-loop operation of an air/fuel feedback loop in order to detect malfunctions in the catalyst. In particular, the invention proposes monitoring the amplitude fluctuations of the post-catalyst HEGO sensor output signal when the gain of the feedback loop including the catalyst and the engine is set at certain levels. When an engine is operated with a high conversion efficiency catalyst and the closed-loop gain is set at a low value, the post-catalyst HEGO sensor output will fluctuate with a high amplitude at a non-specific frequency. When the closed-loop gain setting is increased, the HEGO sensor output will fluctuate in a definite limit cycle mode at a relatively low frequency.

If the catalyst is replaced by one having a lower conversion efficiency and the closed-loop feedback gain is set low, the post-catalyst HEGO sensor output will fluctuate in a generally random manner with an amplitude which is less than that associated with the high conversion efficiency catalyst, the HEGO sensor output will fluctuate in a well defined limit cycle mode at a frequency which is higher than that observed with the better catalyst. In order to produce a clean limit cycle oscillation, the closed-loop gain has to be set higher for the lower efficiency catalyst than for the better catalyst.

Finally, if the catalyst is replaced by a dead or non-functional catalyst and the closed-loop feedback gain is set low, the post-catalyst HEGO sensor output will fluctuate in a generally random manner with an amplitude which is less than that associated with the active catalysts. When the closed-loop gain is increased with the dead catalyst, the HEGO sensor output will fluctuate in a well defined limit cycle mode at a frequency which is higher than that obtained with the active catalysts. In order to produce a clean limit cycle oscillation, the closed-loop gain has to be set higher with the dead catalyst than for the active catalysts. The invention includes the concept of varying the feedback gain to be compatible with the characteristics of whatever catalyst is being monitored so that optimal closed-loop operation can be achieved for reliable catalyst evaluation.

Thus, this invention provides a method to detect the degradation in the conversion efficiency of a catalyst under normal engine operating conditions. The degradation is detected by examining the amplitude of the air fuel fluctuations which result when a post-catalyst HEGO sensor is used in a low gain air fuel feedback loop. This can be characterised by plots of HEGO sensor voltage output for feedback from a HEGO sensor located after the catalyst for various catalyst conversion efficiencies.

The invention will now be described further, by way of example, with reference to the accompanying drawings, in which :
Fig. 1a is a graphical representation of post-catalyst HEGO sensor voltage versus time for a low feedback gain and a high conversion efficiency catalyst;
Fig. 1b is a post-catalyst HEGO sensor voltage output versus time for a low feedback gain and a medium conversion efficiency catalyst;
Fig. 1c is a post-catalyst HEGO sensor voltage output versus time for a low feedback gain and a zero conversion efficiency catalyst;
Fig. 2 is a typical block diagram of the connection of two HEGO sensors and their relationship to a catalyst;
Fig. 3 is a block diagram of a signal processing arrangement from a downstream EGO sensor in accordance with a first embodiment of this invention;
Fig. 4 is a logic flow diagram in accordance with an embodiment of this invention wherein low gain is used and EGO sensor signal amplitude is measured, amplitude indicating high efficiency and low amplitude indicating low efficiency;
Fig. 5 is a logic flow diagram in accordance with an embodiment of this invention wherein feedback gain is increased until EGO sensor signal amplitude reaches a predetermined value and the feedback gain in then compared to a predetermined feedback gain value, with higher gain indicating lower conversion efficiency; and
Fig. 6 is a logic flow diagram in accordance with an embodiment of this invention wherein feedback gain is increased until limit cycle operation begins and then the gain is held constant, the frequency of limit cycle operation indicating catalyst failure if it is greater than a predetermined stored frequency of limit cycle operation.

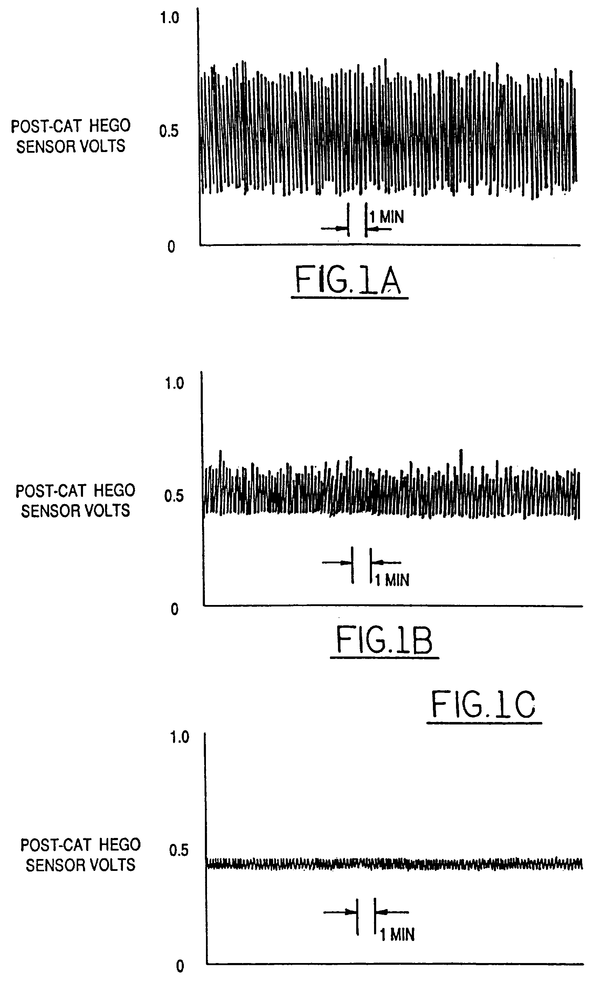

As an illustration of this invention, the output voltage of an HEGO sensor located downstream of a catalyst is shown in Figures 1a, 1b, and 1c for low feedback gains with a high efficiency catalyst, a medium efficiency catalyst, and a dead catalyst, respectively.

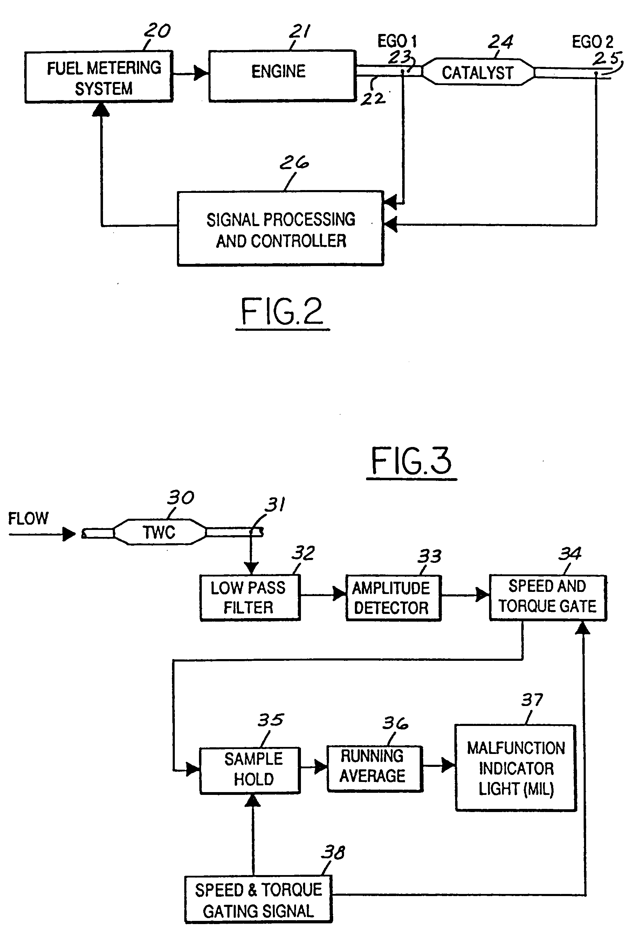

Referring to Figure 2, a fuel metering system 20 produces a control output to an engine 21 which then produces exhaust gas to an exhaust manifold 22. The exhaust gas flow first encounters an EGO sensor 23 which is upstream of catalyst 24. Exhaust gas flow then goes to an EGO sensor 25 which is downstream of the catalyst. Signals from EGO sensors 23 and 25 are applied to a signal processing and controller 26. The output of controller 26 is applied to fuel metering system 20. The embodiments of this invention are applicable to using an exhaust gas oxygen sensor for each of EGO sensors 23 and 25. Alternatively, upstream EGO sensor 23 can be a universal EGO (UEGO) sensor which provides a linear output. Downstream EGO sensor 25 is then selected to be a heated exhaust gas oxygen sensor. Further, the first embodiment described below can also be used where a UEGO is used as sensors 23 and 25.

When analysing Figure 1, it is recognised that the amplitude may be a function of the speed and torque of the engine. However, it is desirable to try to make the analysis independent of engine speed and torque. Further, for purposes of this invention, the peak-to-peak value of a signal is important and the dc value of the signal may be ignored.

Referring to Figure 3, in one version of the invention, the gain of the post-catalyst air/fuel feedback loop would be set at a low value during the catalyst testing interval. It may be advantageous to test at the earliest opportunity after the beginning of closed-loop operation of the engine, and then to test no longer than about 20 seconds. The term "low value" in this case means that the gain is not high enough to produce a definite limit cycle oscillation when the catalyst conversion efficiency is very high. As indicated earlier, the output amplitude fluctuations of the post-catalyst HEGO sensor would be large under these conditions provided that the catalyst conversion efficiency is high. If the catalyst conversion efficiency should decrease and the feedback gain is not changed, the amplitude of the HEGO sensor output fluctuations would also decrease.

In this version of the invention, any degradation in the catalyst conversion efficiency is detected by looking for a decrease in the amplitude of the HEGO sensor output fluctuations compared to the value measured with a good catalyst. In particular, when the amplitude of the HEGO sensor output voltage fluctuations drops below a predetermined value (as measured, for example, by a conventional amplitude detection circuit), the catalyst would be judged as defective, and the malfunction indication light can be energised, if desired. Operation, in accordance with this invention is advantageously maintained in the window of the catalyst. One way to help do this is to use the temperature of the post-catalyst HEGO sensor to adjust the air/fuel set point of the feedback system to maintain accurate air/fuel control irrespective of exhaust temperature. Alternatively, the HEGO sensor temperature could be controlled to offset any effects of exhaust gas temperature.

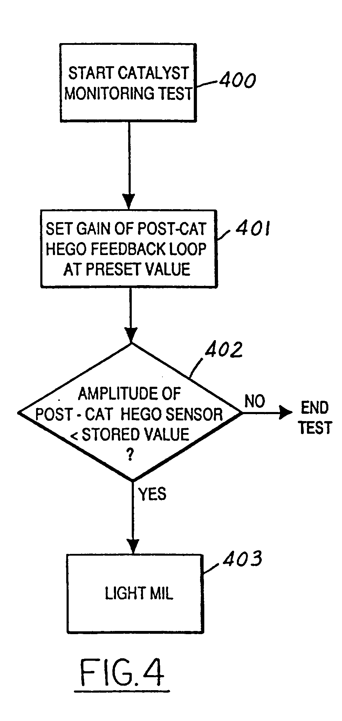

Referring to Fig. 4 which shows the logic flow diagram for this first version, the catalyst monitoring starts at block 400. Logic flow goes to block 401 wherein the gain of the post-catalyst exhaust gas oxygen sensor feedback loop is set at a pre-set value. Logic flow then goes to a decision block 402 wherein the amplitude of the post-catalyst exhaust gas oxygen sensor is compared to a stored value. If the amplitude of the post-catalyst exhaust gas oxygen sensor is not less than the stored value, the test ends. If the amplitude is lower than the stored value, logic flow goes to a block 403 wherein a malfunction indicating light (MIL) is lit.

In summary, in the first version a low gain is applied to the post-catalyst feedback loop and the examination of the post-catalyst EGO sensor output is examined. The criteria used are that a high conversion efficiency results in high amplitude air/fuel fluctuations and that a low conversion efficiency results in low amplitude air/fuel fluctuations. Typical EGO sensor outputs are are shown in Figure 1a, 1b, and 1c.

In accordance with this first embodiment of the invention and, referring to Figure 3, a three-way catalyst 30 has a downstream EGO sensor 31 which provides a single output to a low pass filter 32. The low pass filter is desirable in that it eliminates any high frequency air/fuel noise produced by the engine. Signal flow from low pass filter 32 goes to an amplitude detector 33. If desired, instead of amplitude detector 33, a separate signal inverter could be used to remove the dc level and then the result could be full wave rectified. Signal flow from amplitude detector 33 goes through the sequential blocks of a speed and torque gate 34, a sample and hold circuit 35, a running average circuit 36 and then a malfunction indicator light driver circuit 37. A block 38 applies a speed and torque gating signal to both speed and torque gate 34 and sample and hold circuit 35. Block 38 has information contained therein, typically from engine sensor outputs with respect to engine operation. Block 38 is used to restrict operation over certain speed and load ranges to maintain a desired accuracy of operation.

In another version of the invention, operation of the catalyst monitoring scheme as described above would be modified by automatically adjusting the gain of the feedback loop to maintain the amplitude of the HEGO sensor output at some particular value. In this manner, as the catalyst conversion efficiency decreases, the gain would automatically increase. The invention would function by detecting when the gain exceeded some preset level, and would then use this determination as the criterion for catalyst failure. When the gain exceeded the preset level, the malfunction indicator light can be energised, if desired.

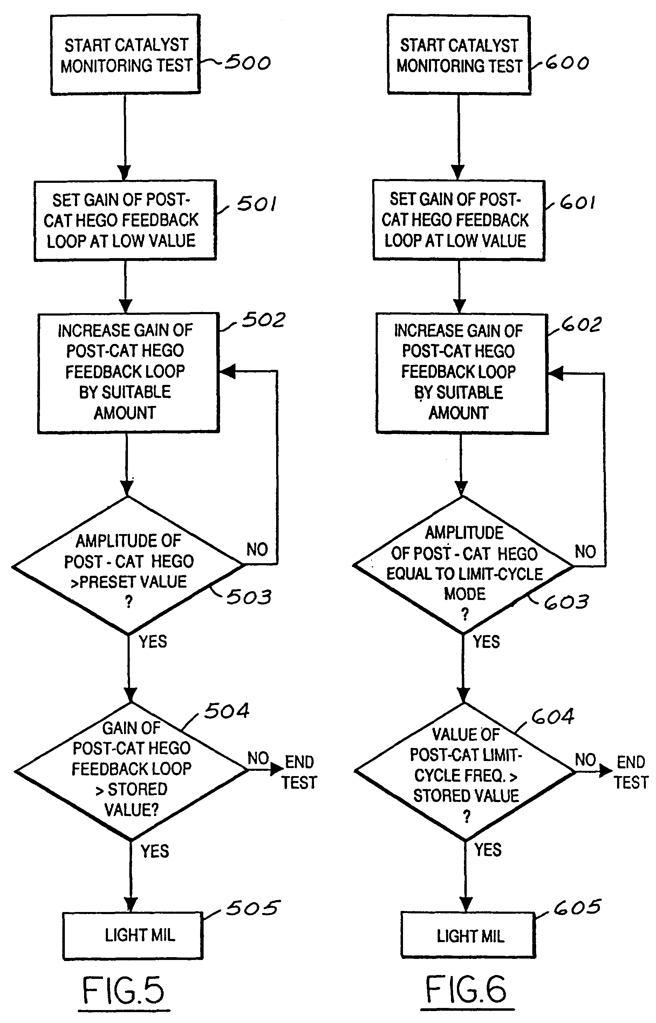

Referring to Fig. 5, in a second version of this invention, at block 500 the catalyst monitoring test is started and logic flow goes to a block 501. In block 501 the gain of the post-catalyst exhaust gas oxygen sensor feedback loop is set at a low value. Logic flow goes to a block 502 wherein there is an increase in gain of the post-catalyst exhaust gas oxygen sensor feedback loop by a suitable amount. Logic flow then goes to a decision block 503 wherein the amplitude of the post-catalyst exhaust gas oxygen sensor is compared to a pre-set value. If it is not greater than the pre-set value, logic flow goes back to block 502. If the amplitude of the post-catalyst exhaust gas oxygen sensor is greater than the pre-set value, logic flow goes to a decision block 504. At decision block 504 the gain of the post-catalyst exhaust gas oxygen sensor feedback loop is compared to a stored value. If it is not greater than the stored value, the test ends. If it is greater than the stored value, logic flow goes to a block 505 wherein a malfunction light is lit.

In summary for the second version, low gain is initially used in the feedback loop. During the catalyst testing interval, the feedback gain is increased until the amplitude fluctuations of the post-catalyst EGO sensor reach some specified value. That is, high conversion efficiency requires a low gain to produce a well defined EGO sensor output. A low conversion efficiency requires a high gain to produce a well defined output. Indication of catalyst failure in this case would be when the gain required to produce a well defined output exceeded a certain threshold.

In a third version of the invention, the gain of the post-catalyst feedback loop would initially be set at a low value at the beginning of the catalyst testing interval, just as in the other versions. The low gain value is necessary in order to avoid an unacceptably high amplitude limit cycle oscillation which would saturate the catalyst. The gain would then be increased until a clearly defined limit cycle oscillation developed as indicated by the output of the post-catalyst HEGO sensor. Once a definite limit cycle oscillation was detected, the gain would be held constant during the remainder of the testing interval, and the frequency of the limit cycle would be determined. Catalyst failure would be considered as having occurred when the limit cycle frequency was greater than a certain predetermined value. Such a determination could be accomplished in the electronic engine control computer by monitoring the time between EGO sensor switchings; when the switching period became shorter than some predetermined value, catalyst failure would be indicated.

In order to establish a well defined limit cycle oscillation with this scheme, the feedback gain would have to be set higher for low conversion efficiency catalysts than it would for high conversion efficiency catalysts. One potential difficulty with this version of the invention is that the determination of the limit cycle frequency could be somewhat unpredictable when the catalyst conversion efficiency is high. In fact, measurements indicate that several different limit cycle frequencies can occur at the same gain setting with catalysts having high conversion efficiencies, depending on the previous operating history of the catalyst. However, all of these different frequencies may be lower than the particular limit cycle frequencies which correspond to faulty catalysts.

Referring to Fig. 6, the logic flow for a third version of this invention starts at block 600 wherein the catalyst monitoring test is started. Logic flow then goes to a block 601 wherein gain of the post-catalyst exhaust gas oxygen sensor feedback loop is set at a low value. Logic flow then goes to a block 602 wherein there is an increase in gain of the post-catalyst exhaust gas oxygen sensor feedback loop by a suitable amount. Logic flow then goes to a decision block 603 wherein the amplitude of the post-catalyst exhaust gas oxygen sensor is set equal to the amplitude in limit cycle mode. If the amplitude is not equal to the limit cycle mode amplitude, then logic flow goes back to block 602. If the amplitude has reached the limit cycle mode amplitude then logic flow goes to a decision block 604. At decision block 604 the value of the post-catalyst limit cycle frequency is compared to a stored frequency value. If the value of the post-catalyst limit cycle frequency is not greater than the stored frequency value, the test ends. If the value of the post-catalyst limit cycle frequency is greater than the stored frequency value, logic flow goes to a block 605 where a malfunction light is indicated.

In summary for the third version, the feedback gain is increased from an initial low value until it is high enough to produce a relatively clean limit cycle oscillation. At that point, the gain is held constant and the limit cycle frequency is measured. A low gain is used initially to prevent overdriving the catalyst which could result in a multiplicity of limit cycle frequencies. Thus, in this third case, indication of catalyst failure is based on a combination of the feedback gain required to produce a limit cycle oscillation and the value of the limit cycle frequency.

Closed-loop air/fuel control systems employing feedback from a post-catalyst HEGO sensor will likely employ feedback from a pre-catalyst HEGO sensor as well. In all versions of the invention discussed herein, the gain of such a feedback loop containing the pre-catalyst HEGO sensor must be set at a low value during the catalyst testing interval in order to avoid any discernible limit cycle oscillation of that loop. If this were not done, the pre-catalyst limit cycle oscillations could obscure the post-catalyst HEGO sensor amplitude/frequency measurements upon which the invention is based. Of course, if a UEGO sensor were used instead of a HEGO sensor for the pre-catalyst sensor, there would be no need to operate the pre-catalyst feedback loop in a limit cycle mode, and the gain of that loop would not have to be set at a low value. It should also be noted that the post-catalyst HEGO sensor could similarly be replaced by an UEGO sensor. If this were done, the first two versions of the invention (i.e., the amplitude measurement schemes) would still be applicable, but the limit cycle frequency scheme generally would not.

In summary, to make sure that the above three variations function properly, it is desired that there be no amplitude modulation of air/fuel ratio due to the upstream (pre-catalyst) HEGO sensor. Possible ways to insure this include 1) disabling the pre-catalyst feedback loop during the catalyst test (assuming a HEGO sensor with limit cycle control), or 2) using a universal EGO sensor, i.e., linear response sensor, for the pre- catalyst feedback loop which produces no limit cycle, or 3) filtering the output of the post-catalyst EGO sensor output in synchronism with the pre-catalyst limit cycle.

## Claims

1. A method of detecting catalyst malfunction in a vehicle including the steps of;
providing a feedback loop to control air fuel ratio as a function of a signal from an exhaust gas oxygen sensor downstream of the catalyst;
setting the feedback gain in the feedback loop to an initial low value;
increasing feedback loop gain until a desired characteristic of output fluctuations of the exhaust gas oxygen sensor is achieved; and
establishing catalyst malfunction as a function of said characteristic of the output fluctuations of the exhaust gas oxygen sensor or the feedback gain necessary to achieve said characteristic.

2. A method as claimed in claim 1, wherein the step of increasing the feedback gain is done until a predetermined amplitude of the output fluctuations of the exhaust gas oxygen sensor is reached and the step of establishing catalyst malfunction includes determining the feedback gain, comparing it to a predetermined feedback gain, and indicating malfunction when the feedback gain is greater than the predetermined feedback gain.

3. A method as claimed in claim 2, wherein there is an automatic adjustment of the feedback gain of the feedback loop to maintain the exhaust gas oxygen sensor output fluctuations at the predetermined amplitude so that as the catalyst conversion efficiency decreases, the gain automatically increases.

4. A method as claimed in claim 1, wherein the gain of the post-catalyst feedback loop is set at a low value at the beginning of the catalyst testing interval to avoid a high amplitude limit cycle oscillation which would saturate the catalyst, and the method includes the steps of;
increasing the gain until a clearly defined limit cycle oscillation is developed as indicated by the output of the exhaust gas oxygen sensor downstream of the catalyst;
holding the gain constant during the remainder of the testing interval;
determining the frequency of the limit cycle; and establishing catalyst failure when the limit cycle frequency is greater than a certain predetermined value.

5. A method as claimed in claim 1, including the steps of:
increasing the gain in the feedback loop until the amplitude fluctuations of the post-catalyst EGO sensor output reach a predetermined value;
determining there is high conversion efficiency if a low gain is required to produce the predetermined value;
determining there is a low conversion efficiency if a high gain is required to produce the predetermined value;
determining the amount of gain required to produce the predetermined value; and
establishing a catalyst failure when the gain is greater than a predetermined amount.

6. An apparatus for detecting catalyst malfunction in a vehicle using an exhaust gas oxygen sensor downstream of the catalyst including:
a feedback loop to control air/fuel ratio as a function of the signal from the exhaust gas oxygen sensor;
means for initially setting the gain of the post-catalyst feedback loop at a low value at the beginning of the catalyst testing interval to avoid a high amplitude limit cycle oscillation which would saturate the catalyst; means for increasing the gain until a clearly defined limit cycle oscillation is developed as indicated by the output of the exhaust gas oxygen sensor downstream of the catalyst;
means for holding the gain constant during the remainder of the testing interval;
means for determining the frequency of the limit cycle;
and means for establishing catalyst failure when the limit cycle frequency is greater than a certain predetermined value.

7. An apparatus for detecting catalyst malfunction in a vehicle using an exhaust gas oxygen sensor downstream of the catalyst including:
means for applying a low gain to a post-catalyst feedback loop;
means for increasing the gain in the feedback loop until the amplitude fluctuations of the post- catalyst EGO sensor output reach a predetermined value;
means for determining there is high conversion efficiency if a low gain is required to produce the predetermined value;
means for determining there is a low conversion efficiency if a high gain is required to produce the predetermined value;
means for determining the amount of gain required to produce the predetermined value; and
means for establishing a catalyst failure when the gain is greater than a predetermined amount.

## Patentansprüche

1. Ein Verfahren zur Erfassung der Fehlfunktion eines Katalysators in einem Fahrzeug, umfassend die Schritte:
des Bereitstellens einer Schleife des Regelkreises zur Steuerung des Luft/Kraftstoff-Verhältnisses als Funktion eines Signals von einem Sauerstoffsensor in den Abgasen unterhalb vom Katalysator;
des Einstellens des Gewinns des Regelkreises in der Schleife des Regelkreises auf einen niedrigen Anfangswert;
des Verstärkens des Gewinns des Regelkreises bis eine gewünschte Eigenschaft der Fluktuationen der Ausgabe des Sauerstoffsensors in den Abgasen erreicht wird; und
des Feststellens der Fehlfunktion des Katalysators als Funktion dieser Eigenschaft der Fluktuationen der Ausgabe des Sauerstoffsensors in den Abgasen oder des zum Erreichen dieser Eigenschaft notwendigen Gewinns des Regelkreises.

2. Ein Verfahren nach Anspruch 1, worin der Schritt des Verstärkens des Gewinns des Regelkreises durchgeführt wird, bis eine vorbestimmte Amplitude der Fluktuationen der Ausgabe des Sauerstoffsensors in den Abgasen erreicht wird, und der Schritt des Feststellens der Fehlfunktion des Katalysators die Bestimmung des Gewinns des Regelkreises umfaßt, seinen Vergleich mit einem vorbestimmten Gewinn des Regelkreises, und das Anzeigen einer Fehlfunktion, wenn der Gewinn des Regelkreises größer als der vorbestimmte Gewinn des Regelkreises ist.

3. Ein Verfahren nach Anspruch 2, worin eine automatische Anpassung des Rückkopplungsgewinns der Schleife des Regelkreises stattfindet, um die Fluktuationen der Ausgabe des Sauerstoffsensors in den Abgasen bei der vorbestimmten Amplitude zu halten, so daß der Gewinn automatisch steigt, wenn das Konversionsvermögen des Katalysators nachläßt.

4. Ein Verfahren nach Anspruch 1, worin der Gewinn der Schleife des Regelkreises hinter dem Katalysator zu Beginn des Zeitraumes der Prüfung des Katalysators auf einen niedrigen Wert eingestellt wird, um eine Schwingung des Grenzzyklus mit großer Amplitude zu vermeiden, die den Katalysator sättigen würde, und wobei das Verfahren die Schritte umfaßt:
des Verstärkens des Gewinns, bis sich eine klar definierte Schwingung des Grenzzyklus entwickelt, wie von der Ausgabe des Sauerstoffsensors in den Abgasen hinter dem Katalysator angezeigt wird;
des Haltens des Gewinns während der übrigen Zeitdauer der Prüfung auf einem konstanten Wert;
des Bestimmens der Frequenz des Grenzzyklus; und
des Feststellens der Fehlfunktion des Katalysators, wenn die Frequenz des Grenzzyklus über einem gewissen, vorbestimmten Wert liegt.

5. Ein Verfahren nach Anspruch 1, umfassend die Schritte:
des Verstärkens des Gewinns in der Schleife des Regelkreises, bis die Fluktuationen der Amplitude der Ausgabe des EGO-Fühlers hinter dem Katalysator einen vorbestimmten Wert erreichen;
des Feststellens, daß ein hohes Konversionsvermögen vorliegt, wenn ein niedriger Gewinn zum Erzeugen des vorbestimmten Wertes benötigt wird;
des Feststellens, daß ein niedriges Konversionsvermögen vorliegt, wenn ein hoher Gewinn zum Erzeugen des vorbestimmten Wertes benötigt wird;
des Bestimmens der Größe des zum Erzeugen des vorbestimmten Wertes benötigten Gewinns; und
des Feststellens einer Fehlfunktion des Katalysators, wenn der Gewinn über einer vorbestimmten Größe liegt.

6. Eine Vorrichtung zum Erfassen der Fehlfunktion des Katalysators in einem Fahrzeug, die einen Sauerstoffsensor in den Abgasen hinter dem Katalysator verwendet, umfassend:
eine Schleife des Regelkreises zur Steuerung des Luft/Kraftstoff-Verhältnisses als Funktion des Signals aus dem Sauerstoffsensor in den Abgasen;
eine Vorrichtung, um den Gewinn der Schleife des Regelkreises hinter dem Katalysator anfänglich auf einen niedrigen Wert einzustellen, zu Beginn des Zeitraumes der Prüfung des Katalysators, um eine große Amplitude der Schwingung des Grenzzyklus zu vermeiden, die den Katalysator sättigen würde;
eine Vorrichtung zum Verstärken des Gewinns bis sich eine klar definierte Schwingung des Grenzzyklus entwickelt, wie von der Ausgabe des Sauerstoffsensors in den Abgasen hinter dem Katalysator angezeigt wird;
eine Vorrichtung, um den Gewinn während der übrigen Zeitdauer der Prüfung konstant zu halten;
eine Vorrichtung zum Bestimmen der Frequenz des Grenzzyklus; und
eine Vorrichtung zum Feststellen der Fehlfunktion des Katalysators, wenn die Frequenz des Grenzzyklus höher als ein gewisser, vorbestimmter Wert liegt.

7. Eine Vorrichtung zum Erfassen der Fehlfunktion des Katalysators in einem Fahrzeug, die einen Sauerstoffsensor in den Abgasen hinter dem Katalysator verwendet, umfassend:
eine Vorrichtung zum Auferlegen eines niedrigen Gewinns auf eine Schleife des Regelkreises hinter dem Katalysator;
eine Vorrichtung zum Verstärken des Gewinns in der Schleife des Regelkreises, bis die Fluktuationen der Amplitude der Ausgabe des EGO-Fühlers hinter dem Katalysator einen vorbestimmten Wert erreichen;
eine Vorrichtung zum Bestimmen, daß ein hohes Konversionsvermögen vorliegt, wenn ein niedriger Gewinn zum Erzeugen des vorbestimmten Wertes benötigt wird;
eine Vorrichtung zum Bestimmen, daß ein niedriges Konversionsvermögen vorliegt, wenn ein hoher Gewinn zum Erzeugen des vorbestimmten Wertes benötigt wird;
eine Vorrichtung zum Bestimmen der Größe des zum Erzeugen des vorbestimmten Wertes benötigten Gewinns; und
eine Vorrichtung zum Feststellen einer Fehlfunktion des Katalysators, wenn der Gewinn über einer vorbestimmten Größe liegt.

## Revendications

1. Procédé de détection de défaillance de catalyseur dans un véhicule comprenant les étapes consistant à :
procurer une boucle de contre-réaction afin de commander le rapport air carburant en fonction d'un signal issu d'un capteur d'oxygène du gaz d'échappement situé en aval du catalyseur,
régler le gain de contre-réaction dans la boucle de contre-réaction à une valeur initiale faible,
augmenter le gain de la boucle de contre-réaction jusqu'à ce une caractéristique souhaitée des fluctuations de sortie du capteur d'oxygène du gaz d'échappement soit atteinte, et
établir la défaillance du catalyseur en tant que fonction de ladite caractéristique des fluctuations de sortie du capteur d'oxygène du gaz d'échappement ou le gain de contre-réaction nécessaire pour atteindre cette caractéristique.

2. Procédé selon la revendication 1 dans lequel l'étape d'augmentation du gain de contre-réaction est effectuée jusqu'à ce qu'une amplitude prédéterminée des fluctuations de sortie du capteur d'oxygène du gaz d'échappement soit atteinte et l'étape d'établissement de la défaillance du catalyseur comprend la détermination du gain de contre-réaction sa comparaison à un gain de contre-réaction prédéterminé et l'indication d'une défaillance lorsque le gain de contre-réaction est supérieur au gain de contre-réaction prédéterminé.

3. Procédé selon la revendication 2, dans lequel il existe un réglage automatique du gain de contre-réaction de la boucle de contre-réaction afin de conserver les fluctuations de sortie du capteur d'oxygène du gaz d'échappement à l'amplitude prédéterminée de telle sorte que lorsque l'efficacité de conversion du catalyseur diminue, le gain augmente automatiquement.

4. Procédé selon la revendication 1, dans lequel le gain de boucle de contre-réaction après catalyseur est réglé à une valeur faible au début de l'intervalle de temps de test du catalyseur afin d'éviter une oscillation de cycle limite d'amplitude élevée qui saturerait le catalyseur, et le procédé comprend les étapes consistant à,
augmenter le gain jusqu'à ce qu'une oscillation de cycle limite définie clairement se développe comme indiqué par la sortie du capteur d'oxygène du gaz d'échappement en aval du catalyseur,
conserver le gain constant durant le reste de l'intervalle de temps de test,
déterminer la fréquence du cycle limite, et établir un défaut de catalyseur lorsque la fréquence de cycle limite est supérieure à une certaine valeur prédéterminée.

5. Procédé selon la revendication 1 comprenant les étapes consistant à :
augmenter le gain de la boucle de contre-réaction jusqu'à ce que les fluctuations d'amplitude de la sortie du capteur EGO après catalyseur atteignent une valeur prédéterminée,
déterminer qu'il existe une efficacité de conversion élevée si un faible gain est nécessaire pour produire la valeur prédéterminée,
déterminer qu'il existe une efficacité de conversion faible si un gain élevé est nécessaire pour produire la valeur prédéterminée,
déterminer la quantité de gain nécessaire pour produire la valeur prédéterminée, et
établir un défaut de catalyseur lorsque le gain est plus grand qu'une quantité prédéterminée.

6. Appareil destiné à détecter le mauvais fonctionnement du catalyseur dans un véhicule utilisant un capteur d'oxygène du gaz d'échappement en aval du catalyseur comprenant :
une boucle de contre-réaction pour commander le rapport air/carburant en fonction du signal issu du capteur d'oxygène du gaz d'échappement,
un moyen pour régler initialement le gain de la boucle de contre-réaction après catalyseur à une valeur faible au début de l'intervalle de temps de test de catalyseur pour éviter une oscillation de cycle limite d'amplitude élevée qui saturerait le catalyseur,
un moyen pour augmenter le gain jusqu'à ce qu'une oscillation de cycle limite définie clairement se développe comme indiqué par la sortie du capteur d'oxygène du gaz d'échappement situé en aval du catalyseur,
un moyen pour conserver le gain constant durant le reste de l'intervalle de temps de test,
un moyen pour déterminer la fréquence du cycle limite,
et un moyen destiné à établir un défaut du catalyseur lorsque la fréquence de cycle limite est supérieure à une certaine valeur prédéterminée.

7. Appareil destiné à détecter une défaillance de catalyseur dans un véhicule utilisant un capteur d'oxygène du gaz d'échappement situé en aval du catalyseur comprenant :
un moyen destiné à appliquer un gain faible à une boucle de contre-réaction après catalyseur,
un moyen pour augmenter le gain dans la boucle de contre-réaction jusqu'à ce que les fluctuations d'amplitude de la sortie du capteur EGO après catalyseur atteigne une valeur prédéterminée,
un moyen destiné à déterminer qu'il existe une efficacité de conversion élevée si un gain faible est nécessaire pour produire la valeur prédéterminée,
un moyen destiné à déterminer qu'il existe une efficacité de conversion faible si un gain élevé est nécessaire pour produire la valeur prédéterminée,
un moyen destiné à déterminer la quantité de gain nécessaire pour produire la valeur prédéterminée, et
un moyen destiné à établir un défaut de catalyseur lorsque le gain est supérieur à une quantité prédéterminée.
